Europäisches Patentamt

European Patent Office

Office européen des brevets

(11) Publication number: **0 049 353**
**A1**

(19)

(12) **EUROPEAN PATENT APPLICATION**

(21) Application number: **81106443.5**

(22) Date of filing: **19.08.81**

(51) Int. Cl.³: **G 06 F 9/26**

(30) Priority: **06.10.80 US 194538**

(43) Date of publication of application:
**14.04.82 Bulletin 82 15**

(84) Designated Contracting States:
**DE FR GB IT NL**

(71) Applicant: **TEXAS INSTRUMENTS INCORPORATED**
**13500 North Central Expressway**
**Dallas Texas 75265(US)**

(72) Inventor: **McElroy, David J.**
**12322 Shaftsbury**
**Houston Texas 77031(US)**

(74) Representative: **Leiser, Gottfried, Dipl.-Ing. et al,**
**Patentanwälte Prinz-Hauser-Leiser Ernsberger Strasse**
**19**
**D-8000 München 60(DE)**

(54) **Semiconductor memory device for microprocessor system.**

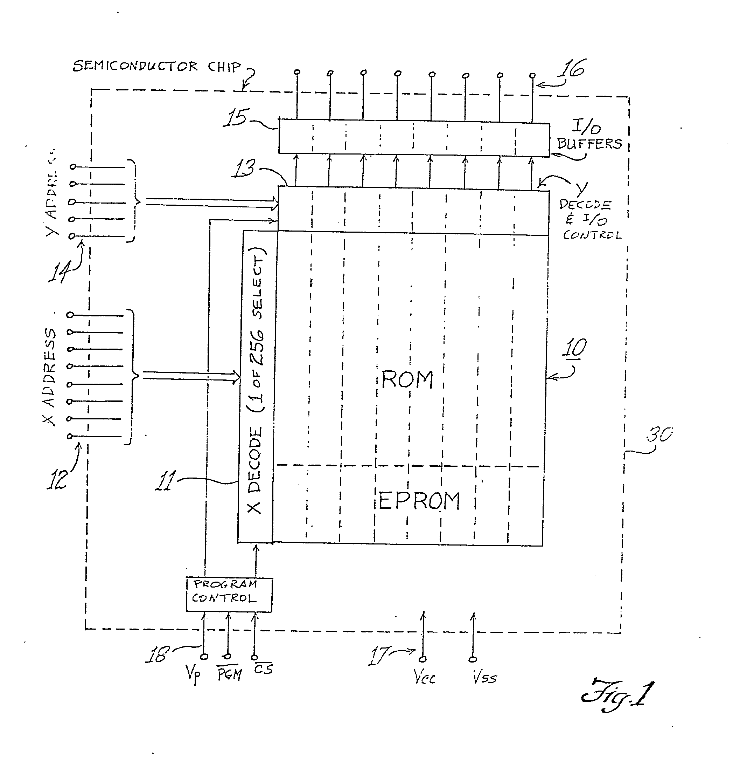

(57) A semiconductor device 30 for use in a microprocessor system contains both fixed-program (ROM) and electrically-programmable (EPROM) parts in the same array 10. The sequences of instruction codes for operating the system are arranged in segments or blocks which are stored in the ROM part, with each segment terminating in a branch to the EPROM part where is found either a branch back to the next segment or a series of codes to replace a portion of the next segment, followed by a branch (Fig. 1).

Fig.1

EP 0 049 353 A1

This invention relates to semiconductor memory devices, and more particularly to storage of instruction codes for a microprocessor in both fixed and programmable memory devices.

A microprocessor system of the type used in automotive engine control includes one or more semiconductor memory devices for storing its program. Electrically programmable ROM's are typically used for this purpose while the system is in development, prototyping, and initial production, then when it is assured that the program is debugged, fixed or mask-programmed ROM's are used for volume production. At present, EPROM's are about ten times more expensive than ROM's, so the advantage of switching over to ROM devices is apparent. However, it is found that changes are often needed in the programs, even after the system has been in mass production for quite some time. Such a change thus requires manufacture of ROM's using a different program mask, imposing a delay of weeks or months from order date to delivery of volume production by the semiconductor manufacturer; added to this is an even longer delay at the systems manufacturer (such as the automobile manufacturer) for stocking assembly plants and lines and for administrative matters. This delay factor has resulted in use of EPROM's even in very high volume production runs, in spite of the higher cost. Also, some systems require a small fraction of the memory to be EPROM because variables must be programmed in after the engine is assembled and tested, or the automobile must be tailored for differing emission control regulations or

BAD ORIGINAL

differing options. For these reasons, automobile manufacturers in particular have not been able to take advantage of the low cost of mask-programmed ROM's for microprocessors.

It is therefore the principal object of the invention to provide lower cost memory devices for microprocessor systems, particularly a memory device that has the advantages of both mask-programmed and electrically-programmed ROM's. Another object is to provide a memory device that is mainly of the fixed program type but which can be easily changed to correct errors or for other purposes. Another object is to provide an improved microprocessor system and method of operating.

SUMMARY OF THE INVENTION:

In accordance with one embodiment of the invention, a semiconductor device for use in a microprocessor system contains both fixed-program (ROM) and electrically-programmable (EPROM) parts in the same chip. The sequences of instruction codes for operating the system are arranged in segments or blocks which are stored in the ROM part, with each segment terminating in a branch to the EPROM part where is found either a branch back to the next segment or a series of codes to replace a portion of the next segment, followed by a branch.

The single-chip device containing both ROM and EPROM according to the invention is of somewhat lower cost than an EPROM device because of higher yield in the ROM part of the array yet it is programmable to the extent needed to make

BAD ORIGINAL

changes in the microprocessor programs as occur during a production cycle.

BRIEF DESCRIPTION OF THE DRAWINGS

The novel features believed characteristic of the invention are set forth in the appended claims. The invention itself, however, as well as other features and advantages thereof, will be best understood by references to the detailed description which follows, read in conjunction with the accompanying drawings, wherein:

FIGURE 1 is a block diagram of a memory device according to the invention;

FIGURE 2 is a greatly enlarged plan view of small portions of a semiconductor chip showing the physical layout of parts of a memory cell array of Figure 1 according to the invention;

FIGURE 3 is an electrical schematic diagram of the parts of the cell array of FIGURE 2;

FIGURES 4a-4f are elevation views in section of the cells of FIGURE 2, taken along the lines a-a, through f-f, respectively in Figure 2;

FIGURE 5 is a block diagram of a microprocessor system using a memory device of Figures 1 - 4; and

FIGURE 6 is a graphic representation of a method of operating the system of Figure 5 according to the invention.

DETAILED DESCRIPTION OF SPECIFIC EMBODIMENTS

Referring to Figure 1, one example of a memory device according to the invention is a memory array 10 which contains 256 rows and 256 columns of memory cells 10' for a total of 64K (or 65,536) cells. Three-fourths of the array 10 is made up of ROM cells and one-fourth is EPROM cells; the ratio of ROM to EPROM is selected according to the intended use. The array is partitioned to provide an 8-bit or byte output as is usual for microprocessor memory devices. An X decoder 11 selects one-of-256 row lines, dependant upon an eight bit X address input on terminals 12, so the X address determines whether the accessed byte is in the ROM or EPROM cell area. A Y decoder 13 selects eight-of-256 column lines (one-of-32 in each partition) as the output (or input for programming the EPROM cells) based on a five-bit Y address on terminals 14. The Y address may be used also to select a ground line adjacent the selected column line in a virtual ground array of the type shown in co-pending applications S.N. 118,348 filed February 4, 1980 or S.N. 088,789, filed October 29, 1979, both assigned to Texas Instruments. Each bit of the eight bit output is connected to one of eight buffers 15 and thus to eight data terminals 16. A 5V Vcc supply and ground or Vss are applied by terminals 17; the 5 V supply is used for read operations. To program the EPROM part of the array 10, a high voltage Vp of about +25V is applied to a terminal 18, along with other controls such as $\overline{PGM}$ as may be desired, depending upon the particular circuit design chosen. A chip select input $\overline{CS}$ may also be employed

BAD ORIGINAL

as in standard practice. For programming, the high voltage Vp is applied to the selected row lines in the EPROM part of the array, and high voltage applied to the selected column lines and Vss applied to selected ground lines, depending upon the Y address and the input data on the terminals 16, to charge the floating gates of selected EPROM cells. The EPROM cells are erased by ultraviolet light through a quartz window in the package used for the chip.

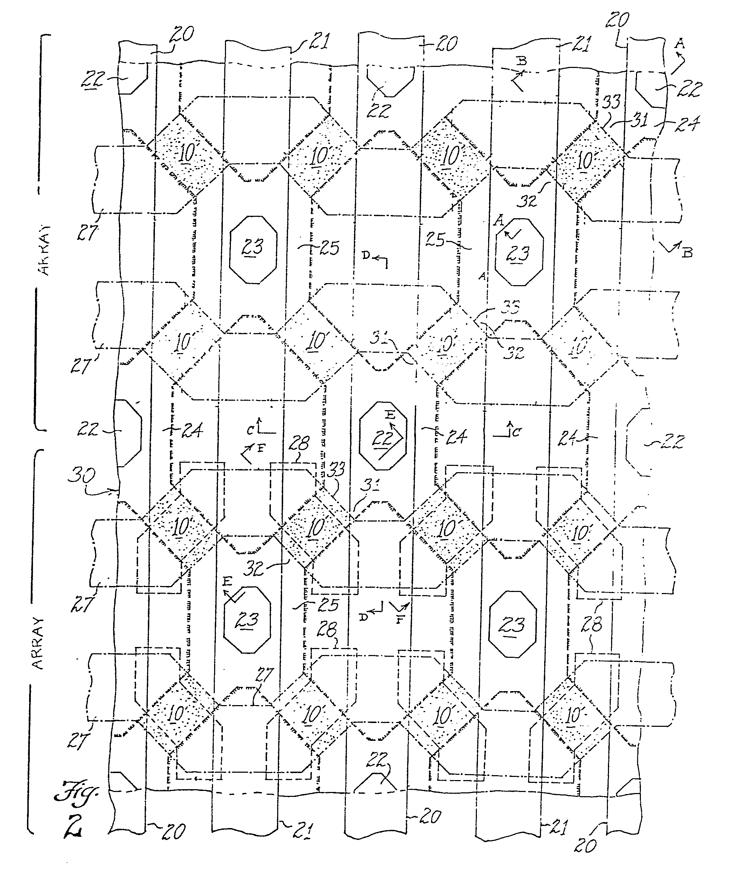

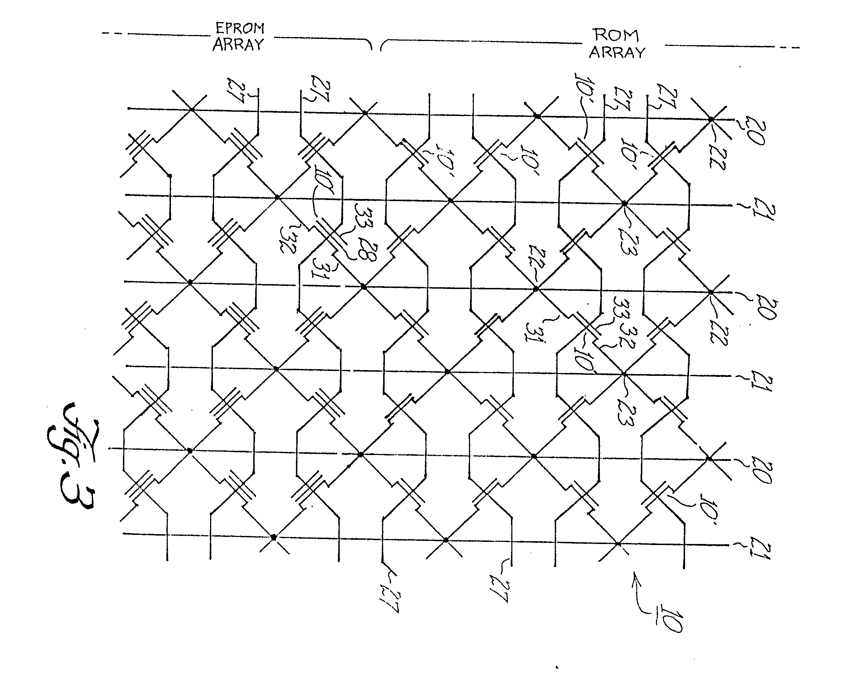

Referring to Figure 2, the cell layout used for the array 10 is shown in greatly enlarged form. An electrical schematic of this part of the array is seen in Figure 3. The cell structures are like that shown in my co-pending application S.N. 106,126, filed December 21, 1979, for the ROM cells and that shown in applications S.N. 088,789 or S.N. 118,348 for the EPROM. The column lines are the same metal lines in both ROM and EPROM,. and include interleaved data lines 20 and ground lines 21, with contact areas 22 and 23 making connection to N+ diffused regions 24 and 25 in the face of the silicon chip. The row lines 27 are polycrystalline silicon strips extending along the face of the chip and are of the same form in the ROM and EPROM parts of the array. In the EPROM cells, the row lines 27 are second level polysilicon and overlie floating gates 28 which are first level poly, whereas in the ROM cells no floating gates are present. The row lines 27 in the ROM part may be composed of either second level or first level polysilicon, depending upon which is expedient in the process chosen. The ROM array is permanently programmed during manufacture by one of several

BAD ORIGINAL

methods. One method is by ion implant through the polysilicon gates as described in my co-pending application S.N. 106,126; in this case the programming mask is applied in a late stage in the process, after the metal strips 20, 21 have been patterned. Another method is "moat" programming as set forth in my U.S. Patent 4,208,726, assigned to Texas Instruments, wherein the programming mask is that which defines the areas of field oxide on the face of the chip, so in this case the pattern of ones and zeros is established very early in the manufacturing process. Contact programming as also shown in Patent 4,208,726 could be used with a different cell layout but not with that of Figure 2 because here each contact 22 or 23 makes connection to four cells 10'.

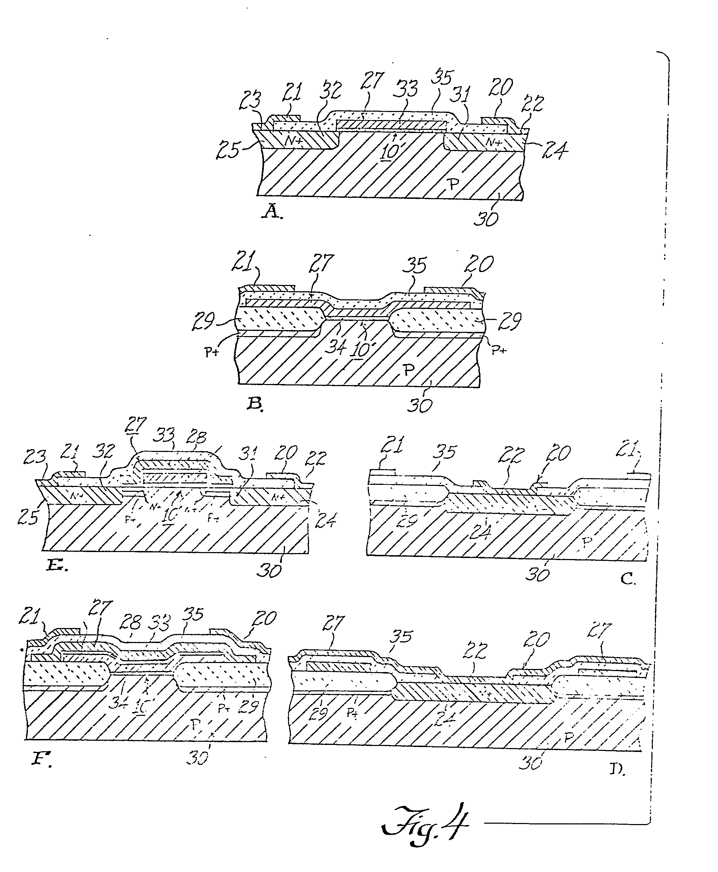

As seen in the sectional views of Figures 4a-4f, each of the cells 10', whether ROM or EPROM, has field oxide 29 surrounding the cell on the face of the silicon chip 30, and N+ source and drain regions 31 and 32 in the moat areas of the face. Each cell has a gate 33 which is part of a row line 27, this being the control gate for an EPROM cell or the only gate for a ROM cell. This gate oxide 34 overlies the channel between source and drain in each cell, and interlevel oxide 35 covers the first-level poly floating gates 28 in the EPROM cells. Multilevel oxide 36 separates the polysilicon from the metal strips 20, 21.

The device of Figures 3 and 4a-4f is made by a process as disclosed in my U.S. Patent 4,208,726, for example, with the ROM part programmed as in my application S.N. 106,126. The fact that the major part of the array 10 is ROM made by

BAD ORIGINAL

a single level poly process rather than double level and having less stringent test parameters means that the yield of good devices per slice will be much higher than for arrays of the same size but with all EPROM cells. It is for this reason that the cost is reduced by perhaps a factor of two or three. In production volume of millions of parts, the cost saving is quite large.

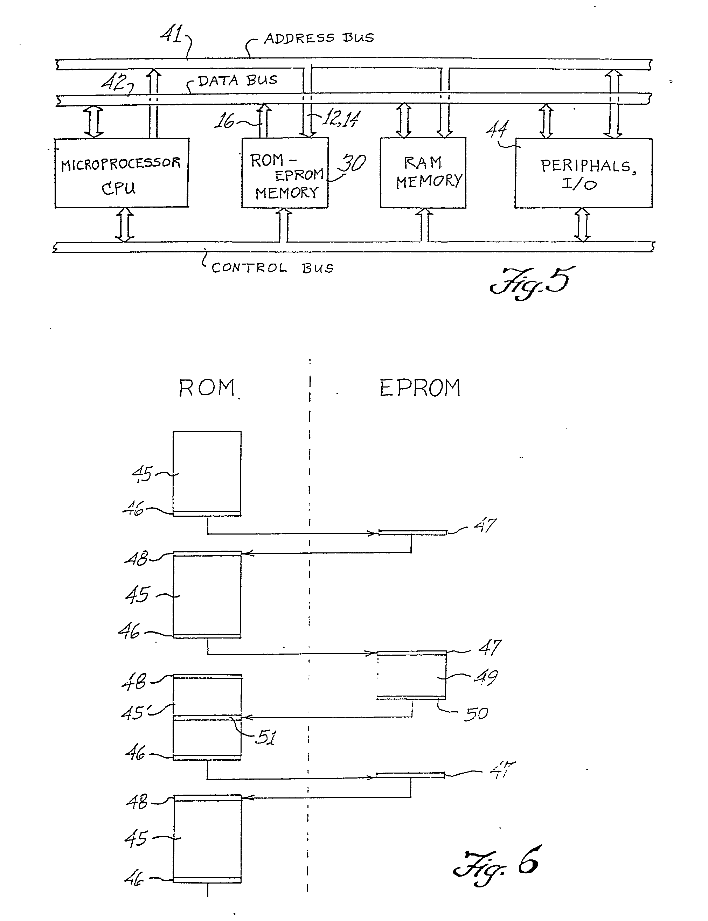

The memory device of Figures 1-4 is used as the memory of a processor system of Figure 5 which is of the type employed in automotive engine controls or the like. A microprocessor chip 40 containing a CPU is connected by a memory address bus 41 to the terminals 12 and 14 chip 30, and by a data bus 42 to the terminals 16. The microprocessor chip 40 may have on-chip read/write RAM memory, or another memory chip 43 may provide the read/write memory usually needed. I/O devices 44 communicate with the system in which the processor is used.

The program stored in the ROM part of the memory of the invention is arranged in 64-byte segments 45 as seen in Figure 6, with an unconditional branch instruction 46 at the end of each segment; this branch instruction is to an address 47 in the EPROM part of the memory. If the next segment 45 of the program is to remain intact, then the instruction at the address 47 is that of the first instruction 48 in this next segment 45. However, if codes in the next segment 45 are to be corrected or changed, then the new codes 49 are contained in the EPROM part, in sequence, through the changed part, then a branch instruction 50 is encountered which

BAD ORIGINAL

contains the address of the instruction 51 following the changed part of the segment 45'. Of course, the entire segment 45' could be skipped, in which case the instruction 50 would be a branch to the first instruction 48 of the following segment. The number of codes or instructions in a segment 45 is chosen as a compromise between the burden of added instructions and EPROM cell area on the one hand, and the amount of good code that has to be repeated in EPROM prior to reaching the code to be changed in a segment, on the other hand, as statistically predicted; a 64-byte segment is merely an example. Also, the size of the segment 45 may vary within a chip depending upon the type of code and probability of errors or changes. Also, the EPROM area can be used to store numerical data that varies from system to system and is used in executing programs stored in ROM. For example, in automotive engine control, the algorithms executed may be essentially fixed but contain some numerical values that change depending upon whether the engine is going in an automobile destined for mountains or sea coast areas, or upon differing emissions control regulations in different geographical areas, or upon optional equipment or upon variations in the engine itself; the same memory devices can thus be used for a wide variety of different automobiles coming through an assembly line, with alterations being made at a test stand. This reduces the inventory of part types, reduces the possibility of error in installing the wrong part, and permits changes without installing a new part.

BAD ORIGINAL

Instead of adding a branch instruction 46 at the end of groups 45 of fixed length, the branch instructions 46 may be ones occurring in the codes as originally written. That is, branches will occur in most code fairly often, and these can be used to get from the ROM to the EPROM part of the memory without artifically inserting a branch. Then, the location 47 in EPROM can be a branch back to the ROM if no patching need be done, or the beginning of a sequence of codes 49 executed from EPROM. Also, if another branch is to occur within a few instruction words, these may be formed in the EPROM to take advantage of this already-existing branch so that the number of added, non-functional, codes is reduced and exectuion time improved. Of course, the branch 46 to EPROM can be part of a loop back to previously-executed codes.

The concept of the invention can be used to produce standard program modules for microcomputer systems for a variety of different uses. The ROM part contains commonly-used sequences which are adapted for specific uses by the codes programmed into the EPROM part.

While this invention has been described with reference to an illustrative embodiment, this description is not intended to be construed in a limiting sense. Various modifications of the illustrative embodiment, as well as those embodiments of the invention, will be apparent to persons skilled in the art upon reference to this description. It is therefore contemplated that the appended claims will cover any such modifications or embodiments as fall within the true scope of the invention.

1. A semiconductor memory device comprising an array of memory cells at a face of a semiconductor body, the array including a fixed-program part and an electrically-programmable part, the fixed-program part containing a plurality of segments of sequential instruction codes, each segment ending in a branch instruction to one of a plurality of destination locations in said electrically-programmable part.

2. A device according to claim 1 wherein some of said destination locations are programmed to contain a branch to the first location in another of said segments.

3. A device according to claim 2 wherein some of said destination locations are programmed to contain the first of a sequence of instruction codes ending in a branch to an intermediate location in a different one of the segments.

4. A device according to claim 3 wherein said sequence of instruction codes includes some of the same instruction codes as in said different one of the segments prior to said intermediate location.

5. A device according to claim 1 wherein the transistors are of the floating gate type in said electrically programmable part.

BAD ORIGINAL

6. A device according to claim 3 wherein the transistors are of the floating gate type in said electrically programmable part.

7. A device according to claim 6 wherein the transistors are programmed by ion implanted regions in the fixed-program part.

8. A device according to claim 6 wherein the transistors are programmed by the presence of thick or thin gate insulator in the fixed-program part.

9. A device according to claim 5 wherein column lines in said array extend continuously through the fixed-program and electrically-programmable parts.

10. A device according to claim 9 wherein a plurality of said segments are of equal length.

11. A microprocessor system comprising a central processing unit for executing instruction codes and accessing memory via address and data lines, a single-chip memory device included in said memory and having an array of memory cells with a fixed-program part and an electrically-programmable part, the fixed-program part having a plurality of blocks of sequential instruction codes with each block ending in a branch to one of a plurality of different locations in the electrically-programmable part.

0049353

12. A microprocessor system according to claim 11 wherein some of said plurality of locations in the electrically-programmable part are branches back to the beginnings of some of the blocks in the fixed-program part.

13. A microprocessor system according to claim 12 wherein some of said plurality of locations in the electrically-programmable part contain the first of a sequence of instructions codes ending in a branch to an intermediate location in a different are of said blocks in the fixed-program part.

14. A microprocessor system according to claim 12 wherein said array of memory cells is an array of field-effect transistors.

15. A microprocessor system according to claim 14 wherein the electrically-programmable part includes floating gate field-effect transistors.

16. A method of operating a microprocessor system of the type having a central processing unit and a memory device with a fixed-program part and an electrically-programmable part, comprising the steps of:

BAD ORIGINAL

executing in the central processing unit sequences of instruction codes from said fixed-program part of said memory device, each of said sequences ending in a branch to a different location in said electrically-programmable part,

executing a branch from some of said different locations immediately back to the beginning of another of said sequences in the fixed-program part of the memory, and

executing in the central processing unit a plurality of instruction codes from said electrically-programmable part beginning at other of said different locations and ending with a branch to an intermediate point in other of said sequences in the fixed-program part.

17. A method according to claim 16 wherein a plurality of said sequences are of fixed length.

18. A method according to claim 17 wherein said plurality of instruction codes executed from said electrically-programmable part include duplications of instruction codes from said sequences along with connections.

19. A method according to claim 18 wherein said electrically-programmable part is programmed by selectively charging floating gates of field-effect transistors.

20. A method of manufacturing a single-chip memory device for a microprocessor system, comprising the steps of:

forming a memory array in a face of a semiconductor substrate with a first part of said array being mask-programmed in fixed manner to define a plurality of blocks of sequential instruction codes each ending in a branch to a second part of said array being electrically programmable,

and thereafter electrically programming said second part to define a plurality of branches to locations in said first part at the beginnings of said blocks, and also to define a plurality of branches to intermediate locations in said first part between the beginnings and ends of said blocks.

21. A method according to claim 20 wherein an array of rows and columns of field effect transistors are formed in said face to provide said array.

22. A method according to claim 21 wherein floating gates are formed in said face for the transistors in said second part.

23. A method according to claim 22 wherein column lines are formed at face extending through both first and second parts of said array.

0049353

-16-

24. A method according to claim 22 wherein a plurality of said blocks are of equal number of instruction words.

25. A method according to claim 22 wherein a plurality of instruction codes are formed prior to said branches to intermediate locations.

- 16 -

*Fig.1*

Fig. 2

*Fig.3*

Fig. 4

ADDRESS BUS

DATA BUS

CONTROL BUS

41

42

16

12,14

30

44

MICROPROCESSOR
CPU

ROM -
EPROM
MEMORY

RAM
MEMORY

PERIPHALS,
I/O

*Fig.5*

ROM

EPROM

45

46

47

48

45

46

47

48

49

45'

50

51

46

47

48

45

46

*Fig. 6*

0049353

**European Patent Office**

**EUROPEAN SEARCH REPORT**

Application number

EP 81 10 6443

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | G 06 F 9/26 |
| | FR - A - 2 427 646 (R.M.S.)<br><br>* page 3, line 5 to page 4, line 3 * | 1-3,10<br>-13,<br>16,17,<br>20,24 | |
| | IBM TECHNICAL DISCLOSURE BULLETIN, vol.16, no.12, May 1974<br>NEW YORK (US)<br>R.M. CORREY:"Read-Only Store Patch"<br>pages 3841-3842<br><br>* the whole article * | 1-3,11-<br>13,16,<br>20,25 | **TECHNICAL FIELDS SEARCHED (Int.Cl. 3)**<br><br>G 06 F 9/26 |
| | IBM TECHNICAL DISCLOSURE BULLETIN, vol.19, no.3, August 1976<br>NEW YORK (US)<br>R.L. QUINN:"Modification of Programs in Read-Only Storage"<br>pages 1066-1067<br><br>* the whole article * | 1,2,11,<br>12,16,<br>20 | |
| | IBM TECHNICAL DISCLOSURE BULLETIN, vol.16, no.8, January 1974<br>NEW YORK (US)<br>P.C. YOUNG:"Changing a Program Stored in a Read-Only Memory Utilizing a Compatible Random-Access Memory"<br>page 2433<br><br>* the whole article * | 1,2,11,<br>12,16,<br>20 | **CATEGORY OF CITED DOCUMENTS**<br><br>X: particularly relevant if taken alone<br>Y: particularly relevant if combined with another document of the same category<br>A: technological background<br>O: non-written disclosure<br>P: intermediate document<br>T: theory or principle underlying the invention<br>E: earlier patent document. but published on. or after the filing date<br>D: document cited in the application<br>L: document cited for other reasons |
| | US - A - 3 983 544 (IBM)<br><br>* the whole document * | 1,5,6,<br>14,15,<br>21-23 | &: member of the same patent family.<br><br>corresponding document |

| | The present search report has been drawn up for all claims | |
|---|---|---|
| Place of search<br>The Hague | Date of completion of the search<br>14-01-1982 | Examiner<br>LEPEE |

EPO Form 1503.1  06.78